# FASCICULE DE BREVET EUROPEEN

(11) **EP 3 652 121 B1**
(45) Date de publication et mention de la délivrance du brevet: **01.05.2024**
(21) Numéro de dépôt: 18752567.0
(22) Date de dépôt: 06.07.2018
(51) Int. Cl.: C03B 37/04

(54) **ASSIETTE DE FIBRAGE**
FASERBILDENDE PLATTE
FIBRE-FORMING PLATE

(30) Priorité: 11.07.2017 FR 1770744
(43) Date de publication de la demande: 20.05.2020
(73) Titulaire: SAINT-GOBAIN ISOVER, 92400 Courbevoie (FR)
(72) Inventeur: LAHMAR, Flavien, 84000 Avignon (FR); VIANEY, François, 75014 Paris (FR); LABARTHE, Jacques, 95160 Montmorency (FR)
(74) Mandataire: Saint-Gobain Recherche
(86) Numéro de dépôt international: PCT/FR2018/051714
(87) Numéro de publication internationale: WO 2019/012211

(56) Documents cités:
- EP-A2- 0 479 675
- FR-A- 1 177 313

## Description

L'invention concerne une assiette de fibrage utilisée notamment pour le formage des fibres minérale pour la production de laine minérale, notamment de laine de verre.

Un procédé habituel pour la production de fibres de verre utilisées dans des applications d'isolation associe un étirage par centrifugation et un étirage gazeux.

Au coeur de ce procédé se trouve une pièce essentielle destinée à permettre l'étirage en filaments du verre fondu : l'assiette, également appelée centrifugeur ou encore « spinner » dans le domaine. Il s'agit d'une centrifugeuse sans fond, coulée en un alliage réfractaire, par exemple à base de chrome tel que décrit dans la demande WO2005/052208. Un exemple d'un tel dispositif de fibrage, incorporant une centrifugeuse ou assiette est par exemple décrit dans la demande FR2443436 à laquelle on se référera pour plus de détails sur son fonctionnement. EP0479675 A2 et FR1177313 A divulguent des assiettes de fibrage proche de celle revendiquée.

De façon connue, la partie latérale de cette pièce, appelée bande latérale ou périphérique, est percée de nombreux trous, dont le diamètre est habituellement de l'ordre de 0,5 à 3 mm. Pendant la production de fibres, l'assiette tourne normalement à une vitesse de rotation d'environ 1500 à 3000 tours par minute. Par l'action de la force centrifuge, le verre est poussé vers l'extérieur et passe à travers les trous, ce qui forme des fibres qui sont ensuite rabattues vers le bas et étirées par des jets de gaz chauds. Les assiettes sont soumises à des conditions d'utilisation particulièrement rudes. Premièrement, la température au niveau de la bande de l'assiette est élevée, le verre fondu étant à une température de l'ordre de 1000°C à 1200°C lorsqu'il parvient à l'intérieur du dispositif de fibrage. Deuxièmement, la rotation et l'existence de gradients thermiques entraînent l'apparition de fortes contraintes mécaniques par dilatations différentielles. Enfin l'assiette fonctionne dans un milieu corrosif pour les alliages, ce qui entraîne d'une part une érosion des trous, et donc un affaiblissement mécanique structurel, et d'autre part un appauvrissement en chrome de l'alliage à proximité des surfaces en contact avec le verre, et au final un affaiblissement mécanique lié au matériau. Ces différents éléments concourent ensemble à limiter la durée de vie des assiettes. Celles-ci doivent donc être régulièrement démontées et remplacées, ce qui entraîne des arrêts ou des ajustements coûteux de production. De plus, chacune de ces pièces d'alliage réfractaire présente un coût élevé, impactant de façon non négligeable non seulement le rendement mais aussi le coût global du procédé.

Cette problématique est déjà bien connue. Plusieurs possibilités existent pour augmenter la durée de vie des assiettes : on a déjà essayé de modifier les conditions de fibrage, ou encore d'optimiser la composition de l'alliage pour le rendre plus résistant comme décrit dans les publications déjà cités précédemment.

Selon une autre approche, le brevet US 5,591,459 enseigne d'ajouter un dispositif supplémentaire permettant de diminuer la déformation des assiettes.

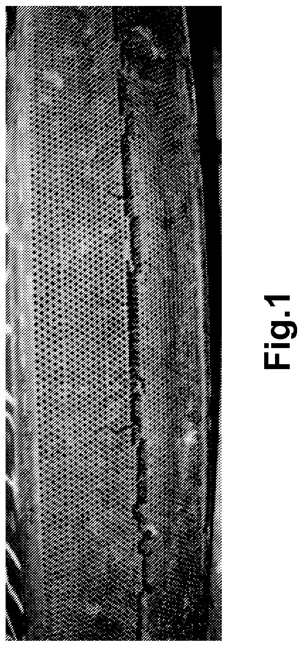

Par ailleurs selon un procédé connu de la publication WO02/064520, les conditions de fibrage ont évolué dans le but d'accroître les capacités de production et de diminuer les consommations d'énergie du procédé. Dans ce contexte, les configurations des assiettes incorporent plus de trous dans la bande et augmentent ainsi la section de passage du verre. Malheureusement, cette solution implique parfois une dégradation visible de la résistance mécanique des assiettes et donc une diminution importante de leur durée de vie, qui peut aller jusqu'à 25%. La résistance mécanique des assiettes demande à être améliorée pour en prolonger la durée de vie. La photo de la figure 1 illustre un mode de dégradation par l'apparition de fissures dans les zones sensibles de l'assiette, notamment de fissures horizontales au milieu de la bande de fibrage.

L'invention consiste en de nouvelles formes et configurations d'assiettes permettant de réduire les sollicitations mécaniques sur la partie la plus sensible, c'est-à-dire la plus exposée aux fissures : la bande percée. Cette modification permet également de conserver le profil de perçage de l'assiette, préalablement configuré pour garantir une bonne qualité du produit final, par exemple selon les principes décrit dans la publication WO99/65835. Les configurations d'assiette selon l'invention permettent ainsi d'améliorer le comportement mécanique de l'assiette et sa résistance thermomécanique en conditions de fibrage et au final d'en augmenter sensiblement la durée de vie, en diminuant les contraintes dans la bande. Plus particulièrement, en diminuant ces contraintes, on diminue les déformations visco-plastiques irréversibles, déformations liées aux phénomènes de fluage, ce qui permet de retarder l'apparition des fissures.

Plus précisément, selon la présente invention, on a cherché à modifier la forme de l'assiette sans altérer les paramètres de perçage (notamment le nombre, la concentration et la disposition des trous dans la bande de fibrage). En outre, les assiettes développées selon la présente invention peuvent être utilisées sans modification des tirées ou des conditions du fibrage. Au contraire des concepts développés dans le brevet US 5,591,459, il n'est par ailleurs pas nécessaire pour l'opérateur de procéder au montage d'un élément supplémentaire pour limiter la déformation de l'assiette. Plus précisement, la présente invention se rapporte à une assiette configurée pour le fibrage de fibres minérales, notamment de fibres de verre, par centrifugation à partir d'un matériau fondu, comprenant :
- une bande périphérique, de préférence tronconique, percée d'orifices pour le passage du matériau fondu et l'obtention des fibres par étirement lors de ladite centrifugation,
- un voile reliant ladite bande périphérique à une collerette supérieure de fixation de l'assiette dans un dispositif de fibrage,
- un revers prolongeant ladite bande périphérique dans la partie basse de l'assiette et formant un angle β avec celle-ci.

Selon la présente invention, l'angle β est strictement inférieur à 90°.

Selon des modes avantageux de la présente invention, qui peuvent bien entendu et le cas échéant être combinés entre eux :
- Le revers présente un angle d'inclinaison α avec l'horizontale inférieur ou égale à 10°.
- Le revers présente une longueur totale inférieure à 10% du diamètre total de l'assiette.
- Le revers présente sur toute sa longueur une épaisseur sensiblement uniforme.
- Le diamètre de l'assiette est compris entre 200 et 800 mm. Par diamètre de l'assiette on entend conventionnellement le diamètre obtenu à partir du contour circulaire le plus grand.
- Le revers présente une longueur totale inférieure à 15% du diamètre de l'assiette.
- La bande périphérique (2) présente un angle γ compris entre 1 et 10% avec la verticale.
- Le revers présente une longueur totale inférieure à 50% de la longueur mesurée, selon un plan de coupe radial, entre le bord extérieur de l'assiette et l'extrémité intérieure de la collerette de fixation de l'assiette.
- L'angle β est strictement inférieur à 87°, et en particulier est inférieur à 85°.
- L'angle α est strictement inférieur à 5° et en particulier est inférieur à 2°, voire est nul.

L'invention se rapporte également à une utilisation d'une assiette tel que décrite précédemment dans un procédé de fibrage d'une laine de verre ou d'une laine minérale.

L'invention se rapporte enfin à un procédé de fibrage d'une laine de verre ou minérale utilisant une telle assiette.

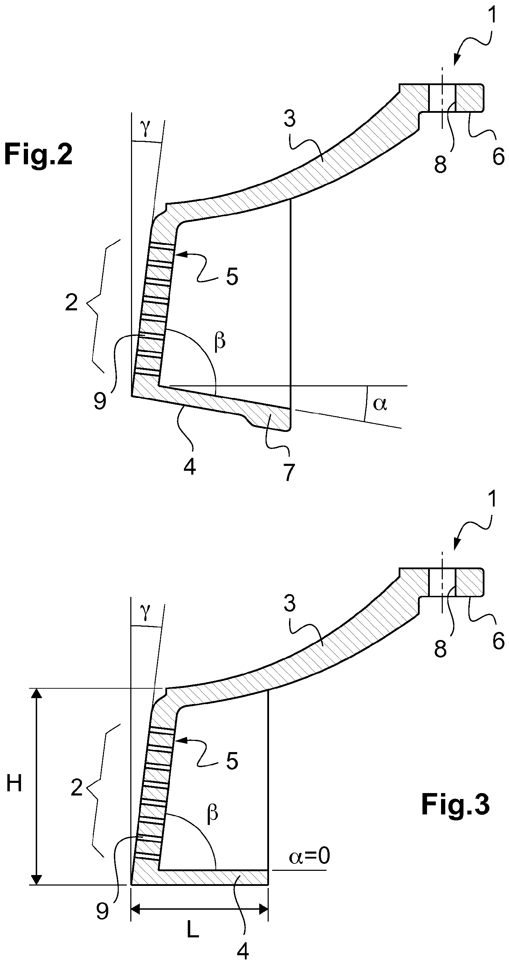

Pour une meilleure compréhension de l'objet de la présente invention, on décrit ci-après deux assiettes : une première assiette configurée selon les techniques actuelles et une deuxième assiette configurée selon la présente invention, avec l'aide des illustrations reportées respectivement sur les figures 2 et 3 ci-jointe.

Sur la figure 2, on schématise une partie d'une assiette 1 de fibrage conforme à la technique actuelle, selon un plan de coupe transversal par rapport à l'axe de révolution de ladite assiette.

En fonctionnement, l'assiette 1 est fixée à un arbre (non représenté sur la figure) qui l'entraîne en rotation. L'arbre et l'assiette sont animés d'un mouvement de rotation. L'arbre est creux et le verre à l'état fondu s'écoule depuis des moyens d'alimentation non représentés dans l'arbre jusqu'à un panier (également non représenté sur la figure 1) dans lequel se répand le verre fondu. Le panier est également entraîné en rotation de sorte que le verre fondu est projeté contre la paroi interne 5 de la bande 2, formant sur cette paroi une réserve permanente de verre fondu. Cette réserve vient alimenter des orifices circulaires 9 percés dans ladite paroi 5 et débouchant sur l'extérieur de la bande périphérique 2 de l'assiette. Cette bande 2 est usuellement inclinée d'un angle γ d'environ 5 à 10° par rapport à la verticale, pour adopter une forme tronconique. De très nombreux orifices circulaires dont la taille, la concentration et la répartition ont été optimisées selon les techniques classiques, notamment telles que décrites dans la demande WO02/064520, sortent des cônes d'écoulement se prolongeant en avant-fibres, projetées dans le courant gazeux annulaire émis par le brûleur. Sous l'action de ce courant, ces avant-fibres s'étirent, leur portion terminale générant des fibres discontinues (non représentées) ensuite collectées sous l'assiette par exemple sur un tapis sur lequel s'accumulent les fibres pour former un matelas. D'autres moyens de collecte peuvent bien évidemment être également envisagés selon l'invention, notamment lorsque le produit final d'isolation est destiné à être vendu en vrac.

Comme indiqué précédemment, la mise en oeuvre d'un tel dispositif entraîne des sollicitations mécaniques et thermiques intenses sur la paroi percée 5.

Sur la figure 2 on a uniquement synthétisé la partie gauche d'une assiette de fibrage 1 selon l'invention. L'assiette 1 comprend une partie supérieure constituée par une collerette supérieure de fixation 6 comprenant des orifices 8 usinés pour sa fixation à un support adapté en conséquence et permettant de l'entraîner en rotation lors du processus de fibrage décrit précédemment. Cette partie supérieure de fixation 6 est reliée à la bande périphérique 2 dont la paroi 5 est percée de trous 9 par une portion curviligne appelée voile 3 dans la technique. La bande périphérique 2 est liée cette fois dans son extrémité inférieure à un revers 4 prolongeant ladite bande dans la partie basse de l'assiette et formant un angle β avec celle-ci.

Le revers 4 s'étend radialement vers le centre de l'assiette 1. Il permet de récolter et de concentrer le verre fondu à proximité de la paroi 5 de la bande percée avant son fibrage selon les principes précédemment décrits.

Selon les techniques actuelles, le revers présente classiquement un angle α supérieur ou égal à 10° avec l'horizontale, comme indiqué par la figure 2. Par l'horizontale, on entend au sens de la présente invention le plan de référence horizontal défini lorsque l'assiette est positionnée dans le dispositif de fibrage. Une telle configuration a été choisie dans l'art car elle apparait la plus susceptible de limiter le contraintes thermomécaniques au niveau de la jonction entre la partie basse de la bande percée et du revers. On pensait ainsi jusqu'à maintenant que l'ouverture liée à cet angle α permettait de limiter les contraintes et ainsi de prolonger la vie de l'assiette, en particulier en permettant d'ajuster l'angle β formé à la jonction entre la bande 2 et le revers 4, selon ledit plan de coupe, à une valeur égale ou supérieure à 90°.

La longueur du revers 4 est en général suffisamment longue pour éviter tout risque de débordement du verre accumulé contre la paroi en dehors de l'assiette.

Selon une autre technique classiquement retenue, le revers présente dans sa partie extrême, c'est-à-dire dans sa partie la plus proche du centre de l'assiette, un renforcement de matière ou renfort 7. Cette matière supplémentaire est supposée renforcer le renfort lui-même à son extrémité, pour éviter également les fissures dans sa partie la plus sollicitée.

Sur la figure 3 ci-jointe, on a représenté une assiette de fibrage selon l'invention, selon un même plan de coupe que pour l'exemple 1.

Contrairement à l'assiette de la figure 2, l'angle β formé à la jonction entre la bande 3 et le revers 4 présente cette fois une valeur strictement inférieure à 90°, comme représenté sur la figure 3. En particulier, l'angle β est avantageusement inférieur à 89°, notamment inférieur à 88°, voire inférieur à 87°, voire encore inférieur à 86° ou même inférieur à 85°, ou encore de manière la plus préférée inférieur à 84°.

L'assiette selon l'invention comprend un revers présentant un angle α avec l'horizontale inférieur à 10°, notamment inférieur à 9°, voire inférieur à 8°, voire encore inférieur à 7° ou même inférieur à 6°, ou encore inférieur à 5°. Selon un mode possible et avantageux, l'angle α est proche ou égal à 0, c'est-à-dire proche de l'horizontale. Selon un tel mode l'angle α peut par exemple être égal ou inférieur à 4°, à 3°, à 2° ou encore inférieur à 1°.

En outre, contrairement à l'assiette selon les techniques antérieures, sur la représentation de l'assiette préférée reportée sur la figure 3, le renfort 7 a été supprimé de la configuration conforme à l'invention. Il a en effet été découvert par la société déposante qu'un tel renfort pouvait avoir des effets néfastes en accroissant notablement les sollicitations en contrainte dans la partie basse de la bande 2. On propose ainsi sur la configuration décrite en figure 3 un revers présentant sur toute sa longueur une épaisseur sensiblement uniforme.

Selon un mode avantageux de l'invention, on a également pu démontrer expérimentalement, comme il est décrit par la suite, que les meilleurs résultats des durées de vie des assiettes sont obtenus pour des assiettes présentant l'angle β ou l'angle α décrit précédemment en liaison avec la figure 3 et dont la longueur L du revers est réduite, et en particulier ne dépasse pas 10% du diamètre de l'assiette, sans pour autant impliquer des risques de débordement du verre fondu. En particulier les assiettes préférées selon l'invention présentent les caractéristiques suivantes :
- des longueurs du revers comprises entre 5,0 et 9,5% du diamètre de l'assiette, de préférence entre 7,0 et 9,0% du diamètre de l'assiette,
- des angles α compris respectivement entre 0 et moins de 10° et/ou
- des angles β compris entre 80 et moins de 90°, notamment entre 80 et 88°, en particulier compris entre 82 et 86°.

De telles assiettes ont montré les meilleures durées de vie lors de tests de fibrage de fibres de verre.

Les exemples qui suivent permettent d'illustrer les avantages et les performances supérieures des assiettes configurées selon la présente invention, mais purement illustratifs et ne doivent pas être considérés comme limitatifs de la présente invention sous aucun des aspects décrits.

On a coulé des assiettes de diamètre D=400 mm selon des configurations conformes aux figures 2 (selon les techniques actuelles) et 3 (selon l'invention) dans l'alliage métallique décrit dans l'exemple 2 de la demande EP511099, pour le fibrage d'une composition de verre de type borosilico-sodo-calcique.

Les données géométriques principales des deux types d'assiettes utilisés sont données ci-après.

**Tableau 1**

| | Configuration selon l'art antérieur (figure 2) | Configuration selon l'invention (figure 3) |
|---|---|---|
| Angle β | 90° | 83° |
| Angle α | 10° | 0° |
| Angle γ | 7° | 7° |
| L (cm) | 40 | 35 |
| L/D | 0,1 | 0,087 |
| H (cm) | 50 | 50 |

| | | |
|---|---|---|
| L : longueur du revers D : Diamètre de l'assiette H : Hauteur de la bande | | |

Les résultats expérimentaux réalisés dans les conditions réelles de fibrage, effectuées sur une population de 30 pièces pour chacun des deux types d'assiettes, ont montré une augmentation moyenne de la durée de vie des assiettes conforme à la configuration selon la présente invention de l'ordre de 15% par rapport à la configuration classique.

## Revendications

1. Assiette (1) configurée pour le fibrage de fibres minérales, notamment de fibres de verre, par centrifugation à partir d'un matériau fondu, comprenant :
- une bande périphérique (2), de préférence tronconique, percée d'orifices (9) pour le passage du matériau fondu et l'obtention des fibres par étirement lors de ladite centrifugation,
- un voile (3) reliant ladite bande périphérique (2) à une collerette supérieure (6) de fixation de l'assiette dans un dispositif de fibrage,
- un revers (4) prolongeant ladite bande périphérique (2) dans la partie basse de l'assiette et formant un angle β avec celle-ci,
ladite assiette étant **caractérisée en ce que** l'angle β est strictement inférieur à 90°.

2. Assiette selon la revendication 1, dans laquelle le revers (4) présente un angle d'inclinaison α avec l'horizontale inférieur ou égale à 10°.

3. Assiette selon l'une des revendications précédentes, dans laquelle le revers (4) présente une longueur totale inférieure à 10% du diamètre total de l'assiette.

4. Assiette selon l'une des revendications précédentes, dans laquelle le revers (4) présente sur toute sa longueur une épaisseur sensiblement uniforme.

5. Assiette selon l'une des revendications précédentes, dont le diamètre est compris entre 200 et 800 mm.

6. Assiette selon l'une des revendications précédentes, dans laquelle le revers (4) présente une longueur totale inférieure à 15% du diamètre de l'assiette.

7. Assiette selon l'une des revendications précédentes, dans laquelle la bande périphérique (2) présente un angle γ compris entre 1 et 10% avec la verticale.

8. Assiette selon l'une des revendications précédentes, dans laquelle le revers (4) présente une longueur totale inférieure à 50% de la longueur mesurée, selon un plan de coupe radial, entre le bord extérieur de l'assiette et l'extrémité intérieure de la collerette de fixation de l'assiette.

9. Assiette selon l'une des revendications précédentes, dans laquelle l'angle β est strictement inférieur à 87°.

10. Assiette selon l'une des revendications précédentes, dans laquelle l'angle β est strictement inférieur à 85°.

11. Assiette selon l'une des revendications précédentes, dans laquelle l'angle α est strictement inférieur à 5°.

12. Assiette selon l'une des revendications précédentes, dans laquelle l'angle α est inférieur à 2°.

13. Assiette selon l'une des revendications précédentes, dans laquelle l'angle α est nul.

14. Utilisation d'une assiette tel que décrite dans l'une des revendications précédentes dans un procédé de fibrage d'une laine de verre ou d'une laine minérale.

## Patentansprüche

1. Scheibe (1), die für die Zerfaserung von Mineralfasern, insbesondere Glasfasern, durch Zentrifugierung aus einem geschmolzenen Material konfiguriert ist, umfassend:
einen Umfangsstreifen (2) vorzugsweise kegelstumpfartig, der mit Öffnungen (9) für den Durchgang des geschmolzenen Materials und die Gewinnung von Fasern durch Ziehen bei der Zentrifugierung durchbohrt ist,
- eine Abdeckung (3), die den Umfangsstreifen (2) mit einem oberen Flansch (6) zum Befestigen der Scheibe in der Zerfaserungsvorrichtung verbindet,
- eine Rückseite (4), die den Umfangsstreifen (2) in dem unteren Teil der Scheibe verlängert und einem Winkel β damit ausbildet,
wobei die Scheibe **dadurch gekennzeichnet ist, dass** der Winkel β strikt kleiner als 90° ist.

2. Scheibe nach Anspruch 1, wobei die Rückseite (4) einen Neigungswinkel α mit der Horizontalen aufweist, der kleiner als oder gleich 10° ist.

3. Scheibe nach einem der vorstehenden Ansprüche, wobei die Rückseite (4) eine Gesamtlänge aufweist, die kleiner als 10 % des Gesamtdurchmessers der Scheibe ist.

4. Scheibe nach einem der vorstehenden Ansprüche, wobei die Rückseite (4) über ihre gesamte Länge eine im Wesentlichen gleichmäßige Dicke aufweist.

5. Scheibe nach einem der vorstehenden Ansprüche, dessen Durchmesser zwischen 200 und 800 mm liegt.

6. Scheibe nach einem der vorstehenden Ansprüche, wobei die Rückseite (4) eine Gesamtlänge aufweist, die kleiner als 15 % des Durchmessers der Scheibe ist.

7. Scheibe nach einem der vorstehenden Ansprüche, wobei der Umfangsstreifen (2) einen Winkel γ zwischen 1 und 10 % mit der Vertikalen aufweist.

8. Scheibe nach einem der vorstehenden Ansprüche, wobei die Rückseite (4) eine Gesamtlänge, die kleiner als 50 % der gemessenen Länge ist, entlang einer radialen Schnittebene, zwischen dem Außenrand der Scheibe und dem Innenende des Befestigungsflansches der Scheibe aufweist.

9. Scheibe nach einem der vorstehenden Ansprüche, wobei der Winkel β strikt kleiner als 87° ist.

10. Scheibe nach einem der vorstehenden Ansprüche, wobei der Winkel β strikt kleiner als 85° ist.

11. Scheibe nach einem der vorstehenden Ansprüche, wobei der Winkel α strikt kleiner als 5° ist.

12. Scheibe nach einem der vorstehenden Ansprüche, wobei der Winkel α strikt kleiner als 2° ist.

13. Scheibe nach einem der vorstehenden Ansprüche, wobei der Winkel α null ist.

14. Verwendung einer Scheibe, wie in einem der vorstehenden Ansprüche beschrieben, in einem Verfahren zum Zerfasern einer Glaswolle oder einer Mineralwolle.

## Claims

1. A spinner (1) configured for fiberizing mineral fibers, in particular glass fibers, by centrifugation from a molten material, comprising:
- a peripheral barrel (2), preferably frustaconical, pierced with orifices (9) for the passage of the molten material and for obtaining fibers by drawing during said centrifugation,
- a wheel center (3) connecting said peripheral barrel (2) to an upper flange (6) for securing the spinner in a fiberizing device,
- a turnup (4) extending said peripheral barrel (2) in the bottom part of the spinner and making an angle β therewith,
said spinner being **characterized in that** the angle β is strictly less than 90°.

2. The spinner as claimed in claim 1, in which the turnup (4) has an angle of inclination α with respect to the horizontal that is less than or equal to 10°.

3. The spinner as claimed in one of the preceding claims, in which the turnup (4) has a total length less than 10% of the total diameter of the spinner.

4. The spinner as claimed in one of the preceding claims, in which the turnup (4) has, over its entire length, a substantially uniform thickness.

5. The spinner as claimed in one of the preceding claims, the diameter of which is comprised between 200 and 800 mm.

6. The spinner as claimed in one of the preceding claims, in which the turnup (4) has a total length less than 15% of the diameter of the spinner.

7. The spinner as claimed in one of the preceding claims, in which the peripheral barrel (2) makes an angle γ comprised between 1 and 10% with the vertical.

8. The spinner as claimed in one of the preceding claims, in which the turnup (4) has a total length less than 50% of the length measured, in a radial plane of section, between the exterior edge of the spinner and the interior end of the spinner-securing flange.

9. The spinner as claimed in one of the preceding claims, in which the angle β is strictly less than 87°.

10. The spinner as claimed in one of the preceding claims, in which the angle β is strictly less than 85°.

11. The spinner as claimed in one of the preceding claims, in which the angle α is strictly less than 5°.

12. The spinner as claimed in one of the preceding claims, in which the angle α is strictly less than 2°.

13. The spinner as claimed in one of the preceding claims, in which the angle α is zero.

14. The use of a spinner as described in one of the preceding claims in a method for fiberizing a glass wool or a mineral wool.
